# EUROPÄISCHE PATENTSCHRIFT

(11) **EP 2 569 346 B1**
(45) Veröffentlichungstag und Bekanntmachung des Hinweises auf die Patenterteilung: **19.11.2014**
(21) Anmeldenummer: 11714267.9
(22) Anmeldetag: 11.04.2011
(51) Int. Cl.: C08G 18/67, C08G 18/75, C09J 175/16, C08G 18/28

(54) **FILMBILDENDER STRAHLENVERNETZENDER KLEBSTOFF**
FILM-FORMING RADIATION-CROSSLINKING ADHESIVE
ADHÉSIF FILMOGÈNE RÉTICULABLE PAR RADIATION

(30) Priorität: 11.05.2010 DE 102010028870
(43) Veröffentlichungstag der Anmeldung: 20.03.2013
(73) Patentinhaber: Henkel AG & Co. KGaA, 40589 Düsseldorf (DE)
(72) Erfinder: LACK, Melanie, 40221 Düsseldorf (DE); MÖLLER, Thomas, 40593 Düsseldorf (DE); KRLEJOVA, Andrea, 40210 Düsseldorf (DE)
(86) Internationale Anmeldenummer: PCT/EP2011/055594
(87) Internationale Veröffentlichungsnummer: WO 2011/141245

(56) Entgegenhaltungen:
- DE-A1- 19 851 182
- DE-A1-102007 015 801

## Beschreibung

Die Erfindung betrifft strahlenvernetzbare Schmelzklebstoffe auf Basis von reaktiven Polyurethanen, die ein hohen Modul (G') nach der Vernetzung aufweisen. Diese sollen eine gute Verklebung von Vliessubstraten ermöglichen.

Strahlenhärtende Klebstoffe sind allgemein bekannt. Dabei werden beispielsweise fließfähige, häufig dünnviskose Klebstoffe durch radikalische oder kationische Polymerisation vernetzt und es entstehen Haftklebstoffe oder feste verklebte Schichten. Die Polymere müssen den Substratoberflächen angepasst werden, um eine gute Haftung sicherzustellen.

Ein besonders Anwendungsgebiet sind strahlenvernetzbare Klebstoffe zum Verkleben von Kunststofffolien mit unterschiedlichen Substraten. Beispielsweise werden in vielen Sanitärprodukten Folien auf Folien oder Folien auf Vlies verklebt. Um die unterschiedlichen Materialien elastisch miteinander zu verkleben, wie es in diesem Gebiet notwendig ist, werden elastische Klebstoffe ausgewählt. Die notwendige Festigkeit des Verbunds wird durch das Substrat vorgegeben.

Strahlenhärtende Schmelzklebstoffe sind beispielsweise aus der DE 4041753 A1 oder der WO 02/34858 bekannt. Darin werden zweistufig polymerisierbare Beschichtungsmassen auf Urethanbasis beschrieben, die durch einen Gehalt an UV-polymerisierbaren Acrylatgruppen im Rahmen einer ersten Härtungsstufe verfestigt werden, und in einer nachfolgenden zweiten Stufe über Isocyanatgruppen eine irreversible Vernetzung erfolgt. Zur Viskositätsabsenkung werden dem Klebstoff als Reaktivverdünner monofunktionelle Acrylate zugegeben. Isocyanathaltige Klebstoffe können jedoch gesundheitlich bedenklich sein.

In der EP 1262502 wird ein lineares Polymeres beschrieben, dass ein Polyesterrückgrat aufweist, an einem Kettenende eine ungesättigte Doppelbindung, am anderen Ende einen Alkohol anreagiert enthält. Es werden dort keine Klebstoffe beschrieben, die anreagiert an das Basispolymere die Initiatorgruppen tragen. Als Substrat werden dort reißfeste flächenförmige Trägerschichten beschrieben.

In der DE 102007015801 werden Klebstoffe beschrieben, die als Klebstoff zum Verkleben von Etiketten eingesetzt werden'können. Dabei werden auch strahlenvernetzbare Prepolymere, die auf Basis von Polyether- oder Polyester-Polyurethanprepolymeren hergestellt werden. Es werden nur hochmolekulare Diole eingesetzt, ein PU-Prepolymer als Blockcopolymer mit einem Block aus niedermolekularen Alkylendiolen und Diisocyanaten wird nicht beschrieben. Diese Klebstoffe werden beispielsweise auf Trägerfolien aufgetragen.

UV-vernetzende Klebstoffe sind auch aus der WO 2005/105857 bekannt. Dort werden Umsetzungsprodukte beschrieben aus einem Polyesterdiol, einem Polyetherpolyol zusammen mit einem OH-funktionellen Acrylat, die mit Polyisocyanaten umgesetzt werden. Diese Prepolymere werden dann mit monomeren Acrylaten und Initiatoren gemischt und als reaktiver Klebstoff eingesetzt.

Die bekannten Klebstoffe haben den Nachteil, dass bei der Vernetzung durch den notwendigen Initiator niedermolekulare Zerfallsstoffe entstehen. Das kann bei vielen Anwendungsgebieten, beispielsweise wenn die Verklebungen Hautkontakt bekommen können, unerwünscht sein, da die Haut irritierende oder schädigende Reaktionen möglich sind. Außerdem sind die vernetzten Klebstoffschichten nicht stabil, bei Reißtests dieser Verbunde zeigt sich, dass ein kohäsiver Bruch im Klebstoff beobachtet wird. Der mechanisch stabile Teil eines Verbunds ist die Trägertolie.

Es ist daher Aufgabe der vorliegenden Erfindung, einen geeigneten Klebstoff zum Verkleben von Vliesen zur Verfügung zu stellen, wobei der Klebstoff keine freien Initiatoren enthält, der Klebstofffilm nach der Vernetzung einen hohen Modul aufweist. Er kann auch mechanisch stabil ausgeführt werden und einen reißfesten Polymerfilm ergibt. Weiterhin soll ein Verfahren bereitgestellt werden zum Verkleben von Vliesteilen. Dabei sollen Vliese auch direkt verklebt werden können, ohne eine Trägerfolie zwischen den Vliesteilen zu enthalten.

Die Aufgabe wird gelöst durch die Bereitstellung eines durch Strahlung vernetzenden Schmelzklebstoffs gemäß den Patentansprüchen. Dabei wird ein Schmelzklebstoff zur Verfügung gestellt, der ein Polyurethanpolymer enthält, das mindestens eine durch Strahlung vernetzbare Gruppe und mindestens eine Gruppe eines radikalischen Photoinitiators enthält, wobei das Polyurethanpolymer aus einem reaktiven Polyurethanprepolymer hergestellt wird mit mindestens zwei NCO-Gruppen. Weiterhin soll das Polyurethanprepolymer eine Blockstruktur aufweisen, hergestellt aus einem hochmolekularen Polyetherpolyol endständig umgesetzt mit Diisocyanaten, wobei dieses Umsetzungsprodukt an einem Ende oder an allen Enden einen Block aus 4 bis 50 Alkylendioleinheiten umgesetzt mit Diisocanaten anreagiert enthält, wobei diese Alkylendioleinheit ein Molekulargewicht unter 300 g/mol aufweist. Dieses NCO-terminierte Prepolymer mit Blockstrukturen soll an einem Teil der NCO-Gruppen mit niedermolekularen bifunktionellen Verbindungen umgesetzt werden, die radikalisch vernetzbare Doppelbindungen enthalten, sowie eine mit NCO-Gruppen reaktive Gruppe; zusätzlich mit mindestens mit einem radikalischen Photoinitiator umgesetzt werden, der eine OH-Gruppe enthält und danach anreagiert an einen Teil der NCO-Gruppen vorliegt; gegebenenfalls mit monofunktionellen Verbindungen umgesetzt werden, die keine weiteren radikalisch vernetzbaren Gruppen aufweisen. Die Menge der anreagierten Verbindungen soll der Menge der NCO-Gruppen des Prepolymeren entsprechen. Dabei soll das entstehende PU-Polymer im wesentlichen keine freien NCO-Gruppen mehr aufweisen. Der Klebstoff kann weitere Polymere und/oder Hilfsstoffe enthalten.

Ein weiterer Gegenstand der Erfindung ist die Verwendung solcher Schmelzklebstoffe mit strahlenvernetzbaren funktionellen Gruppen zum Verkleben von Vliessubstraten. Ein weiterer Gegenstand der Erfindung ist die Verwendung solcher Schmelzklebstoffe zur Herstellung von verklebten, reißfesten Mehrschichtgegenständen, die aus mindestens einem Vlies und einem Klebstofffilm aufgebaut sind.

Der erfindungsgemäße Schmelzklebstoff besteht im Wesentlichen aus einem PU-Polymer, das endständig vernetzbare reaktive Doppelbindungen aufweist. Weiterhin müssen an dem PU-Polymer chemisch gebundene Initiatoren vorliegen. Zusätzlich kann das PU-Polymer freie, nicht vernetzbare Polymerkettenenden aufweisen. Das PU-Polymer soll aus einem NCO-reaktiven Polyurethanprepolymer hergestellt werden und eine Blockstruktur aufweisen.

Das Polyurethanprepolymer A) als Basis für die weiteren Umsetzungen soll eine Blockstruktur aufweisen. Es kann durch stufenweise Umsetzung von langkettigen Diolen und/oder Triolen mit einem Überschuss an Diisocyanatverbindungen hergestellt werden, bevorzugt mit unsymmetrischen Diisocyanaten, wobei dieses Zwischenprodukt anschließend in einer weiteren Reaktion mit Diisocyanaten und niedermolekularen Diolen umgesetzt wird. Dabei werden die Mengenverhältnisse so gewählt, dass endständig NCO-funktionalisierte Prepolymere erhalten werden. Eine Verwendung von Anteilen an trifunktionellen Polyolen oder Isocyanaten ist möglich. Insbesondere sollen die Prepolymere jedoch linear sein, d.h. aus Diolen und Diisocyanaten hergestellt werden. Die bei der Synthese der PU-Prepolymeren einsetzbaren Polyole und Polyisocyanate sind dem Fachmann bekannt.

Es können die für Klebstoffanwendung bekannten aromatischen oder aliphatischen Diisocyanate eingesetzt werden. Bei den bevorzugt geeigneten unsymmetrischen Diisocyanaten handelt es sich um monomere aromatische, aliphatische oder cycloaliphatische Di- oder Triisocyanate, die mindestens zwei in der Reaktivität unterschiedliche Isocyanatgruppen aufweisen. Beispiele dafür sind 2,4'-Diphenylmethandiisocyanat (MDI), hydriertes 2,4'-MDI (H12MDI), 2,4-Toluylendiisocyanats (TDI), 1-Methyl-2,4-diisocyanato-cyclohexan, 1,6-Diisocyanato-2,2,4-trimethylhexan, 1,6-Diisocyanato-2,4,4-trimethylhexan, 1-Isocyanatomethyl-3-isocyanato-1,5,5-trimethylcyclohexan (IPDI) oder Lysindiisocyanat. Besonders geeignet sind aliphatische unsymmetrische Diisocyanate.

Als gegebenenfalls anteilsweise einsetzbare trifunktionelle Isocyanate geeignet sind Polyisocyanate, die durch Trimerisation oder Oligomerisation von Diisocyanaten oder durch Reaktion von Diisocyanaten im Überschuss mit poly- oder trifunktionellen hydroxyl- oder aminogruppenhaltigen Verbindungen entstehen. Zur Herstellung von Trimeren geeignete Isocyanate sind die bereits oben genannten unsymmetrischen Diisocyanate. Es sind die Trimerisierungsprodukte von aliphatischen Isocyanaten bevorzugt, insbesondere solche auf Basis TMXDI oder IPDI.

Der Anteil an aromatischen Isocyanaten soll bevorzugt weniger als 50 % der Isocyanate betragen. Besonders bevorzugt sind PU-Prepolymere auf Basis von aliphatischen oder cycloaliphatischen Polyisocyanaten, insbesondere auf Basis von IPDI und/oder hydriertem 2,4'-MDI.

Als langkettige di-funktionelle oder tri-funktionelle Polyole können die bekannten Polyole mit einem Molekulargewicht von mehr als 1000 bis 50000 g/mol ausgewählt werden. Es ist zweckmäßig, dass diese Polyole eine Glasübergangstemperatur aufweisen, die kleiner 20 °C sind, vorzugsweise kleiner 0 °C, besonders bevorzugt kleiner -20 °C. Bevorzugte Polyole sind darüber hinaus bei Raumtemperatur flüssig. Eventuell vorhandene Schmelzpunkte sollten unter 30 °C liegen, bevorzugt unter 20 °C, besonders bevorzugt unter -20 °C. Beispiele für solche Polyole sind OH-Gruppen aufweisende Polyether, Polyester, Polyesteramide, Poly(meth)acrylate oder Polyolefine. Insbesondere geeignete Poly(meth)acrylate werden durch kontrollierte radikalische Polymerisation hergestellt. Zu solchen bekannten Methoden zählen beispielsweise "Reversible Addition Fragmentation" (RAFT), "Nitroxide-Mediated Radical Polymerization" (NMP), "Atomic Radical Transfer Polymerization" (ATRP) oder "Single Electron Transfer- Living Radical Polymerization" (SET - LRP). Besonders bevorzugt sind Poly(meth)acrylate, die endständige OH-Gruppen aufweisen.

Weitere Beispiele für geeignete Polyole zur Herstellung des PU-Prepolymeren sind Polyesterpolyole aus Dicarbonsäuren und Polyetherdiolen, insbesondere als Polyether-Polyester-Blockcopolymere. Dabei können als Polyesterteil die bekannten Polyester mit einem Molekulargewicht unter 6000 g/mol insbesondere unter 2500g/mol eingesetzt werden. Als Polyetherdiol können die dem Fachmann bekannnten Polyetherpolyole ausgewählt werden mit einem Molekulargewicht unter 5000g/mol. Es ist jedoch notwendig, dass der Polyetheranteil der Polyether-Polyesterpolyole mindestens 65 Gew.-% der Polymerkette umfasst.

Ebenfalls geeignet sind auch Polyetherpolyole. Polyetherpolyole werden vorzugsweise durch Umsetzung von niedermolekularen Polyolen mit Alkylenoxiden erhalten. Die Alkylenoxide weisen vorzugsweise zwei bis vier C-Atome auf. Geeignet sind beispielsweise die Umsetzungsprodukte von Ethylenglykol, Propylenglykol oder den isomeren Butandiolen mit Ethylenoxid, Propylenoxid oder Butylenoxid. Es sind auch Umsetzungsprodukte polyfunktioneller Alkohole wie Glycerin, Trimethylolethan oder Trimethylolpropan, Pentaerythrit oder Zuckeralkohole mit den genannten Alkylenoxiden zu Polyetherpolyolen geeignet. Es kann sich um Homopolymere, statistische Polymere oder um Blockcopolymere handeln.

Im Allgemeinen sind Polyole geeignet, die endständige OH-Gruppen aufweisen. Eine besonders bevorzugt Ausführungsform setzt Polyetherpolyole ein mit einem Molekulargewicht von etwa 1500 bis etwa 50.000 g/mol, vorzugsweise von etwa 3000 bis etwa 30.000 g/mol. Insbesondere geeignet sind Polyether mit mindestens 50% Polyethylenglykoleinheiten, insbesondere lineare Polyetherdiole.

Aus dem Polyol und einem Überschuss der Diisocyanate kann in einer ersten Verfahrensstufe ein NCO- terminiertes PU-Prepolymer hergestellt werden. Dieses weist einen Block der Struktur
Diisocyanat - Polyetherpolyol- Disocyanat
auf. An dieses Zwischenprodukt wird anschließend an die Isocyanatgruppen mindestens ein anderer Block aus niedermolekularen Diolen /Diisocyanaten, anreagiert der Struktur
-(Diol - Diisocyanat)ₙ,
mit n gleich 4 bis 50 und die Diole ausgewählt werden aus Alkylendiolen mit einem Molekulargewicht kleiner 300 g/mol. Das Zwischenprodukt kann durch Reaktion mit den oben genannten Diisocyanaten und den niedermolekularen Diolen umgesetzt werden. In einer besonderen Ausführungsform werden zur Herstellung der NCO-Prepolymere aliphatische Diisocyanate bevorzugt unsymmetrische Diisocyanate eingesetzt.

Als niedermolekulare Alkylendiole sind aliphatische, cycloaliphatisch oder aromatische Diole mit einem Molekulargewicht von 62 g/mol bis 300 g/mol zu verstehen, Beispiele dafür sind Ethylenglykol, Diethylenglycol, Propylenglykol, Neopentylglycol, Butandiol-1,4, Pentandiol-1,5, Hexandiol-1,6, Heptandiol-1,7, Octandiol-1,8, Decandiol-1,10, 1,4-Hydroxymethylcyclohexan, 2-Methyl-1,3-propandiol, Brenzcatechin, Resorcin, Hydrochinon, 2,4-Hydroxy-toluol. Insbesondere sind aliphatische Diole mit einem Molekulargewicht unter 200 g/mol bevorzugt.

Die Menge der Diole wird so gewählt, dass zwischen 4 bis 50 Dioleinheiten an den reaktiven Enden der ersten Stufe anreagiert werden, insbesondere bis 20. Insbesondere kann an beiden Enden des Zwischenprodukts ein Block anreagiert werden. Die Menge der Diisocyanate wird entsprechend im Überschuss gewählt, sodass ein NCO-haltiges Prepolymer erhalten wird.

Die NCO-terminierten Prepolymere können mit Blockstruktur hergestellt werden. Es handelt sich dabei jedoch um statistische Prepolymere, d.h. es können auch anteilig Prepolymere mit ähnlichen Strukturen entstehen und im Gemisch vorliegen.

Die Umsetzung der Polyole mit den Polyisocyanaten kann beispielsweise in Gegenwart von Lösemitteln erfolgen, bevorzugt wird jedoch in lösemittelfreier Form gearbeitet. Zur Beschleunigung der Reaktion wird üblicherweise die Temperatur erhöht, beispielsweise zwischen 40 bis 80°C. Gegebenenfalls können zur Beschleunigung der Reaktion in der Polyurethanchemie übliche Katalysatoren zum Reaktionsgemisch zugesetzt werden. Beispiele sind die Zugabe von Dibutylzinndilaurat, Dimethylzinndidecanoat, Dimethylzinndineodecanoat oder Diazabicyclooctan (DABCO). Dabei soll die Menge von etwa 0,001 Gew.-% bis etwa 0,1 Gew.-% des Prepolymeren betragen. Die entstehenden reaktiven PU-Prepolymere A tragen 3 oder bevorzugt 2 Isocyanatgruppen. Dabei handelt es sich um endständige NCO-Gruppen.

In einer weiteren Reaktion werden die NCO-Gruppen anteilsweise mit bifunktionellen Verbindungen B) umgesetzt, die eine funktionelle Gruppe tragen, die mit Isocyanaten reagieren kann und als weitere funktionelle Gruppe eine durch radikalische Polymerisation vernetzbare Doppelbindung aufweist. Diese haben üblicherweise ein Molekulargewicht von weniger als 1500 g/mol.

Beispiele für solche Verbindungen sind Ester von α-β-ungesättigten Carbonsäuren mit niedermolekularen insbesondere aliphatischen Alkoholen, die im Alkylrest noch eine weitere OH-Gruppe tragen. Beispiele für solche Carbonsäuren sind Acrylsäuren, Methacrylsäure, Crotonsäuren, Itaconsäure, Fumarsäure- und Maleinsäure-halbester. Entsprechende OH-Gruppen tragende Ester von (Meth)acrylsäure sind beispielsweise 2-Hydroxyethyl(meth)acrylamid, 2-Hydroxyethyl(meth)-acrylat, 2-Hydroxypropyl(meth)acrylat, 3-Hydroxypropyl(meth)acrylat, 3-Hydroxy-propyl(meth)acrylamid, N-Hydroxyethyl(meth)acrylamid, Umsetzungsprodukte von Glycidylethern oder -estern mit Acryl- oder Methacrylsäure, beispielsweise Umsetzungsprodukte von Versaticsäureglycidylestern mit Acryl- oder Methacrylsäure, Addukte von Ethylenoxid oder Propylenoxid an (Meth)acrylsäure, Umsetzungsprodukte von Hydroxylacrylaten mit ε-Caprolacton oder partielle Umesterungsprodukte von Poylalkoholen, wie Pentaerythrit, Glycerin oder Trimethylolpropan, mit (Meth)acrylsäure.

Die Menge der OH-funktionellen Verbindung mit radikalisch polymerisierbaren Doppelbindungen wird so gewählt, dass 20 bis 95 Mol-% insbesondere 22 bis 90 Mol-%, bevorzugt 25 bis 85 Mol-% bezogen auf die NCO-Gruppen des PU-Prepolymeren eingesetzt werden. Eine bevorzugte Ausführungsform verwendet ein Gemisch von Methacrylaten und Acrylaten, wobei der Anteil an Acrylaten mit mindestens 20 %, insbesondere mindestens 25 % der Mischung ausmacht. Als Obergrenze der Acrylate können bis zu 90 % enthalten sein.

Optional kann das NCO-reaktive PU-Prepolymer mit mindestens einer Verbindung C) umgesetzt werden, die mindestens eine mit Isocyanaten reaktive Gruppe aufweist, darüber hinaus keine weitere unter radikalischen Bedingungen polymerisierbare Gruppe besitzt. Beispiele für solche mit Isocyanate reaktive Gruppen sind OH-, SH- oder NHR-Gruppen. Diese Verbindungen C) sollen ein Molekulargewicht zwischen 32 und 10000 g/mol aufweisen, insbesondere bis 4000 g/mol.

Geeignete monofunktionelle Verbindungen sind beispielsweise Alkohole mit 1 bis 36 C- Atomen, wie beispielsweise Methanol, Ethanol, Propanol und höhere Homologe, sowie die entsprechenden Thioverbindungen. Weiterhin können auch monohydroxy- oder monoamino-funktionelle Polymere eingesetzt werden mit einem Molekulargewicht kleiner 10000 g/mol, insbesondere von 200 und 2000 g/mol. Auch Gemische von niedermolekularen und polymeren Bausteinen sind möglich. Insbesondere soll die funktionelle Gruppe eine OH-Gruppe sein. Die Menge soll 0 bis 50 Mol-% betragen, insbesondere 2 bis 35 Mol-%.

Als weiterer notwendiger Bestandteil des PU-Prepolymeren wird ein Photoinitiator (D) einreagiert, der bei Bestrahlung mit Licht einer Wellenlänge von etwa 215 nm bis etwa 480 nm dazu in der Lage ist, eine radikalische Polymerisation olefinisch ungesättigter Doppelbindungen zu initiieren. Dieser muss zusätzlich eine mit NCO-Gruppe reaktive Gruppe enthalten. Im Rahmen der vorliegenden Erfindung sind grundsätzlich alle handelsüblichen Photoinitiatoren geeignet, die mit dem erfindungsgemäßen Schmelzklebstoff kompatibel sind und einreagiert werden können.

Beispielsweise sind dies alle Norrish-Type I fragmentierenden und Norrish -Typ II Substanzen. Beispiele hierfür sind Photoinitiatoren der Kayacure -Reihe (Hersteller Nippon Kayaku), Trigonal 14 (Hersteller: Akzo), Photoinitiatoren der Irgacure^{®}-, Darocure^{®}- Reihe (Hersteller: Ciba-Geigy), Speedcure^{®}-Reihe (Hersteller Lambson), Esacure-Reihe (Hersteller: Fratelli Lamberti) oder Fi-4 (Hersteller Eastman).

Aus diesen Initiatoren werden erfindungsgemäß solche ausgewählt, die mindestens eine mit NCO-Gruppen reaktive OH-Gruppe besitzt eine primäre oder sekundäre OH-Gruppe. Dabei soll diese OH-Gruppe mit einem Teil der NCO-Gruppen des PU-Prepolymeren reagieren und gebunden am Polymeren vorliegen. Die Menge der reaktiven Initiatoren soll mindestens 2 Mol% bezogen auf die NCO-Gruppen des PU-Prepolymeren betragen, insbesondere zwischen 5 bis 50 Mol-%, bevorzugt zwischen10 bis 30 Mol-%. Der ausgewählte Initiator wird im Rahmen der Polymersynthese zugesetzt, wobei die Summe der Komponenten B, C, D 100 Mol-% bezogen auf die NCO-Gruppen des PU-Prepolymeren ergeben soll.

Die Umsetzungsverfahren zur Umsetzung der reaktiven PU-Prepolymere sind dem Fachmann bekannt. Dabei kann eine Reaktion im Gemisch stattfinden, oder die Bestandteile werden nacheinander umgesetzt. Nach der Umsetzung erhält man statistisch funktionalisierte PU-Blockcopolymere.

In einer anderen Ausführungsform werden mehrfunktionelle mit NCO-reaktive Verbindungen als Komponente C eingesetzt. Die Menge wird so gewählt, dass das OH:NCO-Verhältnis 2:1 beträgt, bevorzugt werden difunktionelle Hydroxyverbindungen ausgewählt. Dabei kann es zweckmäßig sein, Komponente C als letzten Bestandteil der Herstellung des Prepolymeren zuzusetzen. Dabei entstehen dann OH-Gruppen tragende PU-Polymere.

Beispiele für solche Verbindungen sind Diole, Triole oder Polyole, bevorzugt Diole oder Triole, insbesondere Diole. Geeignete Verbindungen sind beispielsweise Polyole mit 2 bis 44 C-Atomen, beispielsweise Ethylenglycol, Propandiol, Butandiol und höhere Homologe, sowie die entsprechenden Thioverbindungen. Die Mengen dieser Polyole werden so gewählt, dass ein geeigneter molarer Überschuss dieser reaktiven Funktionalität in Bezug auf die NCO-Gruppen vorliegt. Es kann eine Kettenverlängerung der NCO-Prepolymere erfolgen, bevorzugt soll jedoch nur eine OH-Gruppe umgesetzt werden, und man erhält freie OH-Gruppen. Dabei soll das Molekulargewicht dieser höherfunktionellen Verbindung C) bis 10000 g/mol betragen, insbesondere von 200 bis zu 3000 g/mol.
Ein erfindungsgemäß geeignetes PU-Polymer kann beispielsweise aus einem Blockcopolymer bestehen, das 20 bis 95 Mol-% der funktionellen Gruppe B, 0 bis 50 Mol-% der Gruppe C und 5 bis 50 Mol-% der Gruppe D enthält, wobei die Summe 100 Mol-% der NCO-Gruppen entspricht.

Das PU-Polymer soll ein Molekulargewicht kleiner 200.000 g/mol aufweisen, insbesondere zwischen 1000 und 100.000 g/mol, bevorzugt zwischen 2000 und 50.000 g/mol, insbesondere unter 20.000 g/mol. Das PU-Polymer soll im wesentlichen frei von Isocyanatgruppen sein, d.h. nach der Umsetzungsreaktion sollen nur noch Spuren von nicht umgesetzten NCO-Gruppen enthalten sein.

Der erfindungsgemäße Schmelzklebstoff muss mehr als 35 Gew.-% der reaktiven PU-Polymere enthalten. Weiterhin kann der Schmelzklebstoff weitere unterschiedliche Polymere und Hilfsstoffe enthalten, die zur Beeinflussung der Eigenschaften geeignet sind. Es handelt sich dabei beispielsweise weitere thermoplastische Polymere, Reaktivverdünner, Harze, Stabilisatoren, Antioxidantien, Weichmacher, weitere Photoinitiatoren, Haftvermittler, Farbstoffe und/oder Füllstoffe.

Beispielsweise kann der Schmelzklebstoff noch zusätzlich Anteile an Reaktivverdünnern enthalten. Als Reaktivverdünner sind besonders solche Verbindungen geeignet, die eine oder mehrere reaktive durch Bestrahlung mit UV-Licht oder mit Elektronenstrahlen polymerisierbare funktionelle Gruppe aufweisen.

Insbesondere sind di- oder höherfunktionelle Acrylat- oder Methacrylatester geeignet mit drei bis sechs (Meth)acrylgruppen. Solche Acrylat- oder Methacrylatester umfassen beispielsweise Ester der Acrylsäure oder Methacrylsäure mit aromatischen, aliphatischen oder cycloaliphatischen Polyolen oder Acrylatester von Polyetheralkoholen. Die Menge kann 0 bis 10 Gew.-% betragen, insbesondere mehr als 0,1 Gew.-%, bevorzugt 2 bis 5 Gew.-%. Damit kann die Vernetzungsdichte des erfindungsgemäßen Schmelzklebstoffes erhöht werden.

Ebenfalls geeignete Verbindungen sind beispielsweise die Acrylsäure- oder Methacrylsäureester der aromatischen, cycloaliphatischen, aliphatischen, linearen oder verzweigten C₄₋₂₀-Monoalkohole oder von entsprechenden Etheralkoholen. Beispiele für solche Verbindungen sind 2-Ethylhexylacrylat, Octyl-/Decylacrylat, Isobornylacrylat, 3-Methoxybutylacrylat, 2-Phenoxyethylacrylat, Benzylacrylat oder 2-Methoxypropylacrylat, Neopentylglykoldi(meth)acrylat, 1,6-Hexandioldi(meth)acrylat, Trimethylolpropantri(meth)acrylat, Pentaerythrittetra(meth)acrylat, sowie (Meth)-acrylatester des Sorbits und anderer Zuckeralkohole. Diese (Meth)acrylatester von aliphatischen oder cycloaliphatischen Diolen können ggf. mit einem aliphatischen Ester oder einem Alkylenoxid modifiziert werden. Die durch einen aliphatischen Ester modifizierten Acrylate umfassen beispielsweise Neopentylglykolhydroxypivalatdi-(meth)acrylat, Caprolacton-modifizierte Neopentylglykolhydroxypivalatdi(meth)-acrylate und dergleichen. Die Alkylenoxid-modifizierten Acrylatverbindungen umfassen beispielsweise Ethylenoxid-modifizierte Neopentylglykoldi(meth)acrylate, Propylenoxid-modifizierte Neopentylglykoldi (meth)acrylate, Ethylenoxid-modifizierte 1,6-Hexandioldi(meth)acrylate oder Propylenoxid-modifizierte 1,6-Hexandioldi(meth)-acrylate, Neopentylglykol-modifizierte (Meth)acrylate, Trimethylolpropandi(meth)-acrylate, Polyethylenglykoldi(meth)acrylate, Polypropylenglykoldi(meth)acrylate und dergleichen. Tri- und höherfunktionelle Acrylatmonomere umfassen beispielsweise Trimethylolpropantri(meth)acrylat, Pentaerythritoltri- und tetra(meth)acrylat, Ditrimethylolpropantetra(meth)acrylat, Dipentaerythritoltetra(meth)acrylat, Dipentaerytrhitolpenta(meth)acrylat, Dipentaerythritolhexa(meth)acrylat, Caprolacton-modifiziertes Dipentaerythritolhexa(meth)acrylat, Pentaerythritoltetra-(meth)acrylat, Tris[(meth)acryloxyethyl] isocyanurat, Caprolacton-modifizierte Tris[(meth)acryloxyethyl]isocyanurate oder Trimethylolpropantetra(meth)acrylat oder Gemische aus zwei oder mehr davon.

In einer Ausführungsform enthält der erfindungsgemäße Schmelzklebstoff mindestens ein klebrigmachendes Harz. Das Harz bewirkt eine zusätzliche Klebrigkeit. Es können grundsätzlich alle Harze eingesetzt werden, die mit dem Schmelzklebstoff verträglich sind, d.h. ein weitgehend homogenes Gemisch bilden.

Es handelt sich dabei insbesondere um Harze, die einen Erweichungspunkt von 70 bis 140 °C besitzen. Es sind dieses beispielsweise aromatische, aliphatische oder cycloaliphatische Kohlenwasserstoff-Harze, sowie modifizierte oder hydrierte Versionen davon. Beispiele dafür sind aliphatische oder alicyclische Petroleum-Kohlenwasserstoffharze und deren hydrierte Derivate, Hydroabietylalkohol und seine Ester; modifizierte Naturharze wie Balsamharz, Tallharz oder Wurzelharz, Kolophonium und seine Derivate; Acrylsäure-Copolymerisate, vorzugsweise Styrol-Acrylsäure-Copolymere und Harze auf Basis funktioneller Kohlenwasserstoff-harze.

Die Harze können chemisch inert sein, oder sie tragen noch funktionelle Gruppen, wie Doppelbindungen, Säure- oder OH-Gruppen. Das Harz kann in einer Menge von 0 bis 70 Gew.-% eingesetzt werden, bevorzugt von 10 bis 40 Gew.-% bezogen auf den Schmelzklebstoff.

Als Weichmacher werden beispielsweise medizinische Weißöle, naphtenische Mineralöle, paraffinischen Kohlenwasserstofföle, Phthalate, Adipate, Polypropylen-, Polybuten-, Polyisopren-Oligomere, hydrierte Polyisopren- und/oder Polybutadien-Oligomere, Benzoatester, pflanzliche oder tierische Öle und deren Derivate eingesetzt. Als einsetzbaren Stabilisatoren oder Antioxidantien können Phenole, sterisch gehinderte Phenole hohen Molekulargewichts, polyfunktionelle Phenole, schwefel- und phosphorhaltige Phenole oder Amine ausgewählt werden. Als Pigmente können beispielsweise Titandioxid, Talkum, Ton und dergleichen ausgewählt werden. Gegebenenfalls können dem Schmelzklebstoff Wachse zugegeben werden. Die Menge ist dabei so bemessen, dass die Adhäsion nicht negativ beeinflusst wird. Das Wachs kann natürlichen oder synthetischen Ursprungs sein.

Ferner können falls zweckmäßig zusätzlich Photosensibilisatoren eingesetzt werden. Durch den Einsatz von Photosensibilisatoren ist es möglich, die Absorption von Photopolymerisationsinitiatoren zu kürzeren und/oder zu längeren Wellenlängen auszuweiten und auf diese Weise die Vernetzung zu beschleunigen. Die von ihnen absorbierte Strahlung bestimmter Wellenlänge wird als Energie auf den Photopolymerisationsinitiator übertragen. Im Rahmen der Erfindung einsetzbare Photosensibilisatoren sind z.B. Acetophenon, Thioxanthane, Benzophenon und Fluorescein und deren Derivate.

Gegebenenfalls ist es möglich, dass zusätzlich zum anreagierten Initiator noch bis zu 5 Gew.-% weitere nicht gebundene Initiatoren in dem Schmelzklebstoff enthalten sind, insbesondere von 0 bis 3 Gew.-%. Dabei kann es sich um einen Überschuss des anreagierten Initiators handeln, es können aber auch unterschiedliche Initiatoren zugesetzt werden. Diese können auch ein anderes Absorptionsverhalten gegen UV-Strahlung aufweisen.

Gegebenenfalls können in den erfindungsgemäßen Klebstoffen Anteile an thermoplastischen Polymeren vorliegen, beispielsweise kann es sich um Polymere mit einem Molekulargewicht größer 1000 g/mol handeln. Diese enthalten keine reaktiven Gruppen, in einer anderen Ausführungsform können diese Polymere vinylisch ungesättigte Gruppen aufweisen. Es sind beispielsweise Polymere aus der Gruppe der Polyacrylate, Polymethacrylate und deren Copolymere, Ethylen-n-butylacrylat-Copolymere, Ethylen-(Meth)Acrylsäure-Copolymere, Ethylen-VinylacetatCopolymere, Polyvinyl-methylether, Polyvinylpyrrolidon, Polyethyloxazoline, Polyamide, Stärke oder Celluloseester, amorphe Polyolefine, beispielsweise Polypropylen-Homopolymere, Propylen-Buten-Copolymere, Propylen-Hexen-Copolymere und insbesondere amorphe Poly-alpha-Olefin-Copolymere (APAOs), die durch Metallocen-Katalyse hergestellt werden, enthalten.

Diese weiteren polymeren Bestandteile können von 0 bis 30 Gew.-%, insbesondere 2 bis 20 Gew.-% im erfindungsgemäßen Schmelzklebstoff enthalten. Das Molekulargewicht beträgt im Allgemeinen über 1000, bevorzugt über 10000 g/mol. Die Auswahl und die Eigenschaften der thermoplastischen Polymere sind dem Fachmann bekannt.

Ein Schmelzklebstoff kann beispielsweise 35 bis 80 Gew.-% PU-Polymer enthalten, 0 bis 60 % Harze, 0 bis 30 % weitere Polymere sowie bis zu 20 Gew.-% weitere Additive.
Insgesamt sollen sich die einzelnen Bestandteile des Klebstoffs auf 100 Gew.-% addieren. Die Auswahl ist dem Fachmann nach den geforderten Eigenschaften möglich, beispielsweise um die Viskosität zu beeinflussen, das Haftvermögen auf den Substraten, die Stabilität des Klebstoffs oder die Kohäsion des Klebstoffs. Verfahren zum Herstellen der erfindungsgemäß geeigneten PU-Polymere und zum Herstellen der Klebstoffe sind bekannt. Die oben genannten Schmelzklebstoffe sind lösemittelfrei und bei Raumtemperatur fest.

Die erfindungsgemäßen Schmelzklebstoffe werden aufgetragen und danach vernetzt. Dabei sind die entstehenden Klebstoffschichten haftklebrig. Sie können einen elastischen Film bilden. Insbesondere weisen diese Schichten als freier Film einen hohen Modul auf (G'). Diese weisen dann als Film eine gute mechanische Stabilität auf. Dabei beträgt die Reißdehnung als vernetzter Prüfkörper (Hantel) mehr als 500%. Das Dehnungsverhalten eines Films ist elastisch.

Ein weiterer Gegenstand der Erfindung ist die Verwendung dieser Schmelzklebstoffe zum Verkleben von Faservliesmaterialien. Dabei können Kunststofffolien auf Vlies verklebt werden, insbesondere ist es jedoch möglich, zwei Vliessubstrate direkt miteinander zu verkleben.

Die Folien als Substrat bestehen im allgemeinen aus thermoplastischen Kunststoffen, insbesondere aus gummielastischen Kunststoffen. Diese können auf Basis von Styrol-Block-Copolymeren, Polyurethan, Polyestern, Polyetherblockcopolymeren oder Polyolefinen hergestellt werden. Insbesondere sind Folien aus Styrol-Block-Copolymeren bekannt, beispielsweise Styrol-Isopren-Styrol, StyrolButadien-Styrol, Styrol-Ethlyen-Blockcopolymere, Polyethylen und Copolymere, Polypropylen und Copolymere sowie Polyethylen C₃ bis C₁₂-α-Olefin-Copolymere. Geeignete Trägerfolien zeichnen sich durch eine gummielastische Dehnung aus, d.h. nach einer Elongation in eine Richtung ziehen sich die entsprechenden Folien bei Ende der Belastung wieder zusammen. Die Folien können eine Dicke von 5 bis 75 µm aufweisen, insbesondere 10 bis 50 µm.

Als zweites Beschichtungsmaterial, das auf eine oder beide Seiten der Folie geklebt werden soll, kann es sich um Vliesstofflagen handeln. Solche Vliesstoffe sind flächige Gebilde, die flexible sind. Sie werden durch Verschlingung von Textilfasern hergestellt, beispielsweise als Spunbond, oder durch Verwirbeln (Spunlaced) hergestellt. Solche Vliese weisen eine hohe Flexibilität auf, weiterhin sind sie für Gase und Flüssigkeiten durchlässig. Die zu den Vliesen verarbeiteten Fasern oder Filamente bestehen im Allgemeinen aus Polypropylen, Polyethylen, Polyester oder Viskose. Solche Vliese zeichnen sich durch eine hohe Flexibilität aus, sie können im Allgemeinen auch gedehnt werden. Solche Vliese sind dem Fachmann bekannt und können je nach Anwendungszweck, beispielsweise der Schichtdicke, ausgewählt werden.

Bei der Verwendung der erfindungsgemäß geeigneten Schmelzklebstoffe werden diese in geschmolzenem Zustand auf ein Substrat aufgebracht, im folgenden Verfahrensschritt verklebt und danach durch Strahlung vernetzt.

Eine andere bevorzugte Ausführungsform der Erfindung setzt solche Klebstoffe zur direkten Verklebung von zwei Vliessubstraten ein. Dabei wird der Klebstoff aufgeschmolzen und auf ein Vlies appliziert. Es ist auch möglich beide Substrate mit dem Klebstoff zu beschichten. Das Auftragen kann prinzipiell durch die bekannten Applikationsarten durchgeführt werden, beispielsweise Sprühapplikation, Schlitzdüsen oder Druckverfahren geschehen. Danach werden beide Substrate zusammengeführt und durch die Abkühlung des Klebstoffs verkleben diese.

Für eine problemlose Verarbeitung sollte die erfindungsgemäßen Schmelzklebstoffe vor der Bestrahlung eine niedrige Viskosität aufweisen, bei 130 °C soll sie üblicherweise 200 mPas bis 10000 mPas betragen, insbesondere von 300 mPas bis 3000 mPas oder von 5000 bis 10000mPas. Die Menge des aufgetragenen Klebstoffs soll von 10 bis 150 g/m² betragen, insbesondere von 15 bis 100.

Die erfindungsgemäßen Schmelzklebstoffe weisen die erforderliche niedrige Viskosität bei den Verarbeitungstemperaturen auf, wie sie beispielsweise bei der Verwendung auf temperaturempfindlichen Vliesmaterialien gewünscht ist. Die Verarbeitungstemperaturen liegen im Bereich von 50°C bis 200°C, bevorzugt im Bereich von 70°C bis 150°C. Die Verarbeitung erfolgt auf an sich bekannten Maschinen.

Nach der Applikation des erfindungsgemäßen Schmelzklebstoffes und dem Zusammenfügen der zu verklebenden Teile wird der erfindungsgemäße Schmelzklebstoff mit einer ausreichenden UV- oder Elektronenstrahl-Dosis bestrahlt, damit der Schmelzklebstoff vernetzt. Dabei wird eine ausreichende Kohäsion aufgebaut. Dabei soll die Dauer der Bestrahlung unterhalb von 5 sec liegen. Bevorzugt werden UV-Strahlen eingesetzt. Eine Bestrahlung und Vernetzung kann in einer Ausführungsform durch die Folie erfolgen, soweit diese für die UV-Strahlung durchlässig ist. Eine andere Ausführungsform vernetzt die Klebstoffschicht durch die Vliesschicht. Dabei ist es zweckmäßig, wenn eine Vliesschicht eine Dicke unterhalb von 5 mm aufweist, insbesondere bis ca. 1 mm. Damit kann sichergestellt werden, dass eine ausreichende Strahlendosis den Klebstoff erreicht. Es können die handelsüblichen UV-Strahler eingesetzt werden, beispielsweise mit einer Wellenlänge von 215 bis 480 nm.

Bei einer erfindungsgemäß bevorzugten Ausführungsform zum Verkleben von zwei Vliessubstraten ist keine Trägerfolie notwendig. Die Menge des Klebstoffs wird so ausgewählt, dass eine flächige Verklebung erfolgt. Die Menge beträgt 20 bis 100 g/m². Damit ist sichergestellt, dass nach der Vernetzung ein weitgehend durchgehender Film des Klebstoffs entsteht. Der erfindungsgemäße vernetzte Klebstofffilm weist eine hohe mechanische Stabilität auf. Dabei ist es zweckmäßig, wenn ein vernetzter Film aus dem Klebstoffmaterial eine Reißfestigkeit von mehr als 25N/ 25 mm aufweist. Damit ist ein entsprechender Film mechanisch stabil und kann so direkt als Verbund mit dem Vlieswerkstoff weiterverarbeitet werden. Durch die Auswahl der Polymere wird außerdem ein Film erhalten, der ein elastisches Dehnverhalten zeigt.

Gegenstand der Erfindung ist weiterhin ein Mehrschichtsubstrat, bestehend aus zwei Vliesschichten, die durch eine vernetzte Klebstoffschicht miteinander verbunden sind. Dabei erfüllt die Klebstoffschicht den Zweck des Verklebens der beiden Vliesschichten miteinander, weiterhin dient diese Schicht als mechanische Tragschicht in diesem Verbund.

Eine andere Ausführungsform der Erfindung umfasst ein Mehrschichtsubstrat, wobei sich zusätzlich eine Folie zwischen den Vliesschichten befindet. Diese ist dann auf beiden Seiten mit dem Vliesmaterial durch einen erfindungsgemäßen Klebstoff verklebt. Die Mehrschichtsubstrate zeichnen sich durch eine hohe Elastizität aus, das heißt, dass das Substrat gedehnt werden kann und danach flexibel in annähernd dieselbe Ausgangsform zurückgeformt wird.

Die erfindungsgemäßen lösemittelfreien Schmelzklebstoffe weisen nach der Vernetzung eine gute Klebkraft auf. Das entstandene Netzwerk ist gleichmäßig aufgebaut und verbessert die Kohäsion dabei deutlich. Es entsteht ein reißfester Polymerfilm, der die bekannten Trägermaterialien ersetzen kann. Die Klebstoffschicht hat einen verringerten Anteil an niedermolekularen Substanzen, sie ist frei von Isocyanatgruppen und frei von nicht kovalent gebundenen Photoinitiatoren. Damit sind diese Schichten auch zum Einsatz in Gegenständen geeignet, die Hautkontakt mit Menschen ergeben. Die erfindungsgemäßen Mehrschichtsubstrate sind elastisch.

Ein weiterer Vorteil einer erfindungsgemäßen Arbeitsweise liegt darin, dass in einer Ausführungsform eine zusätzliche Schicht im Mehrschichtlaminat eingespart werden kann. Damit ist eine vereinfachte Herstellungsweise der Verbundlaminate und ihrer Folgeprodukte möglich.

### Liste der geeigneten Messmethoden:

Molekulargewicht als zahlenmittleres Molekulargewicht, M_{N}, wie durch GPC bestimmbar, gegen Polystyrolstandard;
Glasübergangstemperatur, TG, gemessen mit DSC;
Erweichungspunkt durch Ring-Ball-Methode, DIN 52011;
Reißfestigkeit, Reißdehnung gemessen bei 25°C, EN ISO 1924;
Viskosität gemessen mit Brookfield Viskosimeter, Spindel 27, bei angegebener Temperatur, DIN ISO 2555

Der Gegenstand der Erfindung soll anhand der folgenden Beispiele näher erläutert werden.

### Vergleichsbeispiel 1 (ohne Alkylendiol):

App: 1l-Vierhalskolben mit Rührer; Thermofühler; N2-Überleitung; höhenverstellbares Ölbad; Vakuumpumpe mit stickstoffgefüllter Kühlfalle

### Ansatz:

| | | |
|---|---|---|
| 1.) PPG 4000 | 300,0 g | (Polypropylenglykol 4000; OHZ ca. 28) |
| 2.) IPDI | 25,0 g | (Isophorondiisocyanat) |
| 3.) DBTL | 0,01 g | (Dibutylzinndilaurat, ) |
| 4.) HEA | 5,9 g | (2-Hydroxyethylacrylat, 70 mol%) |
| 5.) Irgacure 2959 | 4,9 g | (Photoinitiator, 30 mol%)) |
| 6.) Irganox 1135 | 3,3 g | (Antioxidant) |
| 7.) Irganox 245 | 3,4 g | (Stabilisator) |

### Versuchsdurchführung:

1,6,7 werden vorgelegt und auf ca. 100°C aufgeheizt. Anschließend wird Vakuum angelegt und bei < 10 mbar 1 h entwässert und anschließend mit Stickstoff belüftet. Anschließend wird 2 zugegeben und homogenisiert. Es wird als Katalysator 3 zugegeben. Es wird weiter gerührt und nach 25 min. der NCO-Wert bei 0,57% bestimmt.

Der Ansatz wird belüftet, 5 und danach 6 unter Rühren zugegeben und homogenisiert. Nach weiteren 1,5 Stunden unter Vermeidung von Licht ist der NCO-Wert ca. 0. Der Ansatz wird im Vakuum entgast und abgefüllt. Viskosität 940 mPas (125 °C)

### Vergleichsbeispiel 2 (statistische Struktur):

Apparatur wie in Beispiel 1

### Ansatz:

| | | |
|---|---|---|
| 1.) PPG 4000 | 300,5 g | (Polypropylenglykol 4000; OHZ ca. 28) |
| 2.) IPDI | 62, 0 g | (Isophorondiisocyanat) |
| 3.) Butandiol | 10,0 g | (aliphat. Diol) |
| 4.) DBTL | 0,01 g | (Dibutylzinndilaurat, ) |
| 5.) HEA | 16,1 g | (2-Hydroxyethylacrylat, 70 mol% ) |
| 6.) Irgacure 2959 | 13,3 g | (Photoinitiator, 30 mol%)) |
| 7.) Irganox 1135 | 3,7 g | (Antioxidant) |
| 8.) Irganox 245 | 3,8 g | (Stabilisator) |

### Versuchsdurchführung:

1,3,7,8 werden vorgelegt und auf ca. 100°C aufgeheizt. Anschließend wird Vakuum angelegt und bei < 10 mbar 1 h entwässert und anschließend mit Stickstoff belüftet. Anschließend wird 2 zugegeben und homogenisiert. Es wird als Katalysator 4 zugegeben. Es wird weiter gerührt und nach 25 min. der NCO-Wert bei 2,18% bestimmt.

Der Ansatz wird belüftet, 6 und danach 7 unter Rühren zugegeben und homogenisiert. Nach weiteren 1,1 Stunden unter Vermeidung von Licht ist der NCO-Wert ca. 0,1. Der Ansatz wird im Vakuum entgast und abgefüllt. Viskosität 470 mPas (125 °C )

### Beispiel 3, (erfindungsgemäße Blockstruktur): Apparatur wie in Beispiel 1

### Ansatz:

| | | |
|---|---|---|
| 1.) PPG 4000 | 300,0 g | (Polypropylenglykol 4000; OHZ ca. 28) |
| 2.) IPDI | 49,7 g | (Isophorondiisocyanat) |
| 3.) DBTL | 0,01 g | (Dibutylzinndilaurat, ) |
| 4.) Butandiol | 10,0 g | (Diol) |
| 5.) HEA | 5,6 g | (2-Hydroxyethylacrylat, 70 mol%) |
| 6.) Irgacure 2959 | 4,9 g | (Photoinitiator, 30 mol%)) |
| 7.) Irganox 1135 | 3,3 g | (Antioxidant) |
| 8.) Irganox 245 | 3,3 g | (Stabilisator) |

### Versuchsdurchführung:

1,7, 8 werden vorgelegt und auf ca. 100°C aufgeheizt. Anschließend wird Vakuum angelegt und bei < 10 mbar 1 h entwässert und anschließend mit Stickstoff belüftet. Anschließend wird 2 (50%) zugegeben und homogenisiert. Es wird als Katalysator 3 zugegeben. Es wird weiter gerührt und nach 25 min. der NCO-Wert bei 0,93% bestimmt.

Der Ansatz wird belüftet, 2 (50%) zugegeben, gerührt und dann 4 zugegeben und homogenisiert.

Nach 12 Min. wird entgast, mit Stickstoff belüftet und 5 und danach 6 unter Rühren zugesetzt. Nach weiteren 2 Stunden unter Vermeidung von Licht ist der NCO-Wert ca. 0. Der Ansatz wird im Vakuum entgast und abgefüllt. Viskosität 7200 mPas (125 °C )

### Testergebnis:

### 100µm Film, gerakelt, UV-Vernetzung

| | V1 | V2 | V3 |
|---|---|---|---|
| D50 [N] | 0,3 | 0,5 | 0,6 |
| D 100 [N] | 0,5 | 1,5 | 0,9 |
| Reißdehnung [%] | < 200 | <200 | 200% /1,4 N |

### Prüfkörper (Hantel) gegossen, UV-Vernetzung (EN ISO 1924)

| | | | |
|---|---|---|---|
| Reißdehnung [%] | 160 | 320 | 920 |
| Kraft/Querschnitt [N/cm²] | 160 | 320 | 375 |

Die erfindungsgemäßen Klebstoffschichten haben eine hervorragende Reißdehnung. Klebstoffe mit statistischem Aufbau oder ohne Diole sind nicht reißfest und dehnbar.

### Beispiel 4, (erfindungsgemäß):

Ein PU-Polymer wird wie in Beispiel 3 hergestellt.
Zu 88 Teilen des Polymeren werden 22 Teile eines Kolophoniumharzes zugegeben und in der Wärme vermischt.
Der Klebstoff wird aufgeschmolzen und mit einer Menge von 75 g/m² auf ein Vliessubstrat (2mm) aufgetragen. Das Substrat wird unmittelbar danach mit UV-Strahlung vernetzt und anschließend mit einer PE-Folie (50µm) verklebt Es entsteht ein stabiler Verbund.

### Beispiel 5, (erfindungsgemäß):

Ein PU-Polymer wird wie in Beispiel 3 hergestellt.
Zu 85 Teilen des Polymeren werden 15 Teile eines Polyolefins zugegeben und in der Wärme homogen vermischt.
Der Klebstoff wird aufgeschmolzen und mit einer Menge von 50 g/m² auf ein Vliessubstrat (2mm) aufgetragen. Das Substrat wird unmittelbar danach mit UV-Strahlung vernetzt und anschließend mit einer PE-Folie (50µm) verklebt Es entsteht ein stabiler Verbund.

### Beispiel 6, (erfindungsgemäß):

Ein PU-Polymer wird wie in Beispiel 3 hergestellt.
Zu 80 Teilen des Polymeren werden 10,5 Teile eines Reaktivverdünners mit ungesättigten Acrylatgruppen, 0,5 Teile eines Photoinitiators zugegeben und vermischt.
Der Klebstoff wird aufgeschmolzen und mit einer Menge von 100 g/m² auf ein Vliessubstrat (2mm) aufgetragen. Das Substrat wird unmittelbar danach mit UV-Strahlung vernetzt und anschließend mit einem weiteren Vlies verklebt.
Es entsteht ein stabiler Verbund.

## Patentansprüche

1. Durch Strahlung vernetzbare Schmelzklebstoffe, enthaltend mehr als 35 % bezogen auf den Schmelzklebstoff von Polyurethanpolymeren, die mindestens eine durch Strahlung polymerisierbare reaktive Gruppe enthalten, hergestellt durch Umsetzung
A) eines reaktiven PU-Prepolymeren mit einer Blockstruktur mit zwei oder drei NCO-Gruppen pro Molekül, wobei ein Block der Struktur
Diisocyanat - Polyol- Disocyanat
enthalten ist und mindestens ein Block der Struktur
(Diol - Diisocyanat)ₙ
enthalten ist, mit
Polyol = Diol oder -Triol mit einem Molekulargewicht (M_{N}) größer 1000 g/mol,
Diol = Alkylendiol mit einem Molekulargewicht kleiner 300 g/mol und
n = 4 bis 50, mit
B) 20 bis 95 Mol-% mindestens einer niedermolekularen Verbindung (B) enthaltend eine radikalisch polymerisierbaren Doppelbindung und eine mit einer NCO-Gruppe reagierenden Gruppe, und
C) 0 bis 50 Mol-% mindestens einer Verbindung (C), die mindestens eine gegen NCO-Gruppen reaktive Gruppe aufweist, aber keine unter radikalischen Bedingungen polymerisierbare Gruppe, mit einer Molmasse von 32 bis 4000 g/mol und
D) 5 bis 50 Mol-% mindestens eines radikalischen Photoinitiators (D), der eine primäre oder sekundäre OH-Gruppe aufweist,
wobei die %-Angaben auf die NCO-Gruppen des PU-Prepolymeren bezogen sind und die Summe aus B, C, D 100 Mol% ergeben soll,
sowie gegebenenfalls weitere Polymere und/oder Hilfsstoffe.

2. Schmelzklebstoff nach Anspruch 1, **dadurch gekennzeichnet, dass** die Polyole Polyetherpolyole sind mit einer Molmasse von 1500 bis 50000 g/mol.

3. Schmelzklebstoff nach einem der Ansprüche 1 bis 2, **dadurch gekennzeichnet, dass** als Diisocyanat aliphatische Diisocyanate eingesetzt werden.

4. Schmelzklebstoff nach Anspruch 3, **dadurch gekennzeichnet, dass** unsymmetrische Diisocyanate eingesetzt werden.

5. Schmelzklebstoff nach einem der Ansprüche 1 bis 4, **dadurch gekennzeichnet, dass** als niedermolekulare Verbindung B) OH-funktionelle Ester der (Meth)Acrylsäure eingesetzt werden und/oder radikalische Photoinitiatoren (D) eingesetzt werden, die eine primäre OH-Gruppe aufweisen.

6. Schmelzklebstoff nach einem der Ansprüche 1 bis 5, **dadurch gekennzeichnet, dass** als Verbindung (C) 2 bis 35 Mol% mono- oder difunktionelle Alkohole eingesetzt werden.

7. Schmelzklebstoff nach einem der Ansprüche 1 bis 6, **dadurch gekennzeichnet, dass** die Diole ein Molekulargewicht von 62 bis 200 g/mol aufweisen.

8. Schmelzklebstoff nach einem der Ansprüche 1 bis 7, **dadurch gekennzeichnet, dass** n zwischen 5 bis 20 beträgt.

9. Schmelzklebstoff nach einem der Ansprüche 1 bis 8, **dadurch gekennzeichnet, dass** weitere thermoplastische Polymere enthalten sind ausgewählt aus solchen auf Basis von Polyestern, Polyethern, Polyamiden oder Polyolefinen, gegebenenfalls auch vinylischen Gruppen aufweisend, und/oder Hilfsstoffe ausgewählt aus Harzen, Stabilisatoren, Weichmachern sowie zusätzliche Photoinitiatoren enthalten sind.

10. Schmelzklebstoff nach Anspruch 9, **dadurch gekennzeichnet, dass** keine freien Photoinitiatoren enthalten sind.

11. Verwendung von durch Strahlung vernetzbaren Schmelzklebstoffen nach einem der Ansprüche 1 bis 10 zum Herstellen von verklebten elastischen Filmen.

12. Verwendung von durch Strahlung vernetzbaren Schmelzklebstoffen nach Anspruch 11 zum Verkleben von Vliessubstraten mit Folien oder von zwei Vliessubstraten miteinander.

13. Verwendung von durch Strahlung vernetzbaren Schmelzklebstoffen nach einem der Ansprüche 1 bis 10 zum Beschichten von Etiketten, Bänden, Filmen, Bandagen und Pflastern mit haftklebrigen Schichten.

14. Verfahren zum Verkleben von Vliessubstraten, **dadurch gekennzeichnet, dass** ein Substrat mit einem Klebstoff nach Anspruch 1 bis 10 beschichtet wird, das zweite Substrat dagegen verklebt wird, anschließend die Klebstoffschicht durch Bestrahlung mit aktinischer Strahlung vernetzt wird, wobei die Bestrahlung durch eine Substratschicht hindurch erfolgt.

15. Verfahren nach Anspruch 14, **dadurch gekennzeichnet, dass** UV-Strahlung eingesetzt wird.

## Claims

1. Radiation-crosslinkable hot-melt adhesives containing more than 35%, relative to the hot-melt adhesive, of polyurethane polymers which contain at least one radiation-polymerizable reactive group, prepared by reacting
A) a reactive PU prepolymer having a block structure with two or three NCO groups per molecule, there being included therein one block of the structure
diisocyanate - polyol - diisocyanate
and at least one block of the structure
(diol - diisocyanate)ₙ,
where
polyol = diol or triol having a molecular weight (M_{N}) of greater than 1000 g/mol,
diol = alkylene diol having a molecular weight of less than 300 g/mol and
n = 4 to 50, with
B) 20 to 95 mol% of at least one low-molecular-weight compound (B) containing a radically polymerizable double bond and a group which is capable of reacting with an NCO group, and
C) 0 to 50 mol% of at least one compound (C) having at least one group reactive to NCO groups but no group that is polymerizable under radical conditions, with a molar mass of 32 to 4000 g/mol, and
D) 5 to 50 mol% of at least one radical photoinitiator (D) having a primary or secondary OH group,
the % figures being related to the NCO groups of the PU prepolymer and the sum of B, C and D adding to 100 mol%,
as well as optionally further polymers and/or auxiliary substances.

2. The hot-melt adhesive according to claim 1, **characterized in that** the polyols are polyether polyols having a molar mass of 1500 to 50,000 g/mol.

3. The hot-melt adhesive according to one of claims 1 to 2, **characterized in that** aliphatic diisocyanates are used as the diisocyanate.

4. The hot-melt adhesive according to claim 3, **characterized in that** asymmetrical diisocyanates are used.

5. The hot-melt adhesive according to one of claims 1 to 4, **characterized in that** OH-functional esters of (meth)acrylic acid are used as the low-molecular-weight compound B) and/or radical photoinitiators (D) are used which have a primary OH group.

6. The hot-melt adhesive according to one of claims 1 to 5, **characterized in that** 2 to 35 mol% of mono- or difunctional alcohols are used as compound (C).

7. The hot-melt adhesive according to one of claims 1 to 6, **characterized in that** the diols have a molecular weight of 62 to 200 g/mol.

8. The hot-melt adhesive according to one of claims 1 to 7, **characterized in that** n is between 5 and 20.

9. The hot-melt adhesive according to one of claims 1 to 8, **characterized in that** further thermoplastic polymers are included, selected from those based on polyesters, polyethers, polyamides or polyolefins, optionally also containing vinyl groups, and/or auxiliary substances selected from resins, stabilizers, plasticizers and additional photoinitiators are included.

10. The hot-melt adhesive according to claim 9, **characterized in that** no free photoinitiators are included.

11. Use of radiation-crosslinkable hot-melt adhesives according to one of claims 1 to 10 for producing bonded elastic films.

12. The use of radiation-crosslinkable hot-melt adhesives according to claim 11 for bonding nonwoven substrates with films or two nonwoven substrates with one another.

13. Use of radiation-crosslinkable hot-melt adhesives according to one of claims 1 to 10 for coasting labels, tapes, films, bandages and plasters with pressure-sensitive adhesive layers.

14. A method for bonding nonwoven substrates **characterized in that** one substrate is coated with an adhesive according to claim 1 to 10, the second substrate is bonded to it, then the adhesive layer is crosslinked by irradiation with actinic radiation, the irradiation taking place through one substrate layer.

15. The method according to claim 14, **characterized in that** UV radiation is used.

## Revendications

1. Colle thermofusible réticulable par un rayonnement, contenant plus de 35%, par rapport à la colle thermofusible de polymères de polyuréthane qui contiennent au moins un groupe réactif polymérisable par un rayonnement, préparé par transformation
A) d'un prépolymère de PU réactif, présentant une structure à blocs présentant deux à trois groupes NCO par molécule, un bloc de structure diisocyanate-polyol-diisocyanate
étant contenu et au moins un bloc de structure
(diol-diisocyanate)ₙ
étant contenu, où
polyol = diol ou triol présentant un poids moléculaire (M_{N}) supérieur à 1000 g/mol,
diol = alkylènediol présentant un poids moléculaire inférieur à 300 g/mol et
n = 4 à 50, avec
B) 20 à 95% en mole d'au moins un composé de bas poids moléculaire (B) contenant une double liaison polymérisable par voie radicalaire et un groupe réagissant avec un groupe NCO, et
C) 0 à 50% en mole d'au moins un composé (C), qui comprend au moins un groupe réactif par rapport aux groupes NCO, mais pas de groupes polymérisables dans des conditions radicalaires, présentant une masse molaire de 32 à 4000 g/mol et
D) 5 à 50% en mole d'au moins un photo-initiateur radicalaire (D), qui présente un groupe OH primaire ou secondaire,
les indications en % se rapportant aux groupes NCO du prépolymère de PU et la somme de B, C, D valant 100 % en mole, ainsi que le cas échéant d'autres polymères et/ou adjuvants.

2. Colle thermofusible selon la revendication 1, **caractérisé en ce que** les polyols sont des polyétherpolyols présentant une masse molaire de 1500 à 50 000 g/mol.

3. Colle thermofusible selon l'une quelconque des revendications 1 à 2, **caractérisé en ce qu'**on utilise, comme diisocyanate, des diisocyanates aliphatiques.

4. Colle thermofusible selon la revendication 3, **caractérisé en ce qu'**on utilise des diisocyanates asymétriques.

5. Colle thermofusible selon l'une quelconque des revendications 1 à 4, **caractérisé en ce qu'**on utilise, comme composé de bas poids moléculaire B), des esters à fonctionnalité OH de l'acide (méth)acrylique et/ou des photo-initiateurs radicalaires (D) qui présentent un groupe OH primaire.

6. Colle thermofusible selon l'une quelconque des revendications 1 à 5, **caractérisé en ce qu'**on utilise, comme composé (C), 2 à 35% en mole d'alcools monofonctionnels ou difonctionnels.

7. Colle thermofusible selon l'une quelconque des revendications 1 à 6, **caractérisé en ce que** les diols présentent un poids moléculaire de 62 à 200 g/mol.

8. Colle thermofusible selon l'une quelconque des revendications 1 à 7, **caractérisé en ce que** n vaut entre 5 à 20.

9. Colle thermofusible selon l'une quelconque des revendications 1 à 8, **caractérisé en ce que** d'autres polymères thermoplastiques sont contenus, choisis parmi ceux à base de polyesters, de polyéthers, de polyamides ou de polyoléfines, présentant le cas échéant également des groupes vinyliques et/ou des adjuvants, choisis parmi les résines, les stabilisants, les plastifiants ainsi que des photo-initiateurs supplémentaires.

10. Colle thermofusible selon la revendication 9, **caractérisé en ce qu'**il ne contient pas de photo-initiateurs libres.

11. Utilisation de colles thermofusibles réticulables par un rayonnement selon l'une quelconque des revendications 1 à 10 pour la fabrication de films élastiques collés.

12. Utilisation de colles thermofusibles réticulables par un rayonnement selon la revendication 11 pour le collage de substrats en non-tissé avec des feuilles ou de deux substrats en non-tissé l'un avec l'autre.

13. Utilisation de colles thermofusibles réticulables par un rayonnement selon l'une quelconque des revendications 1 à 10 pour le revêtement d'étiquettes, de bandes, de films, de bandages et de pansements par des couches adhésives.

14. Procédé pour le collage de substrats en non-tissé, **caractérisé en ce qu'**on revêt un substrat par une colle selon la revendication 1 à 10, on y colle le deuxième substrat, puis on réticule la couche d'adhésif par irradiation par un rayonnement actinique, l'irradiation ayant lieu au travers d'une couche de substrat.

15. Procédé selon la revendication 14, **caractérisé en ce qu'**on utilise un rayonnement UV.
